# EUROPEAN PATENT APPLICATION

(11) **EP 4 629 571 A1**
(43) Date of publication of application: **08.10.2025**
(21) Application number: 22966764.7
(22) Date of filing: 29.11.2022
(51) Int. Cl.: H04L 27/00, H04B 7/185, H04W 56/00

(54) **PHASE COMPENSATION METHOD AND APPARATUS, AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/135071
(87) International publication number: WO 2024/113166

(57) **Abstract**

The present disclosure relates to the technical field of communications, and relates to a phase compensation method and apparatus, and a storage medium, for use in ensuring the phase continuity during repeated transmission of a physical channel. The method comprises: determining a target link; and when a physical channel is repeatedly transmitted, performing phase compensation on the target link.

## Description

### TECHNICAL FILED

This disclosure relates to the field of communication technologies, and in particular, to a phase compensation method, device and storage medium.

### BACKGROUND

In the research of Non-Terrestrial Networks (NTN), satellite communication networks are considered an important aspect of the future development of cellular mobile communication technology. In satellite communication, terminals on the ground communicate with network devices through satellites which serve as relays. The link from the terminal to the satellite is called the service link, and the link from the satellite to the base station is called the feeder link.

In NTN, due to the long distance between the satellites and the terminals on the ground, the path loss is large, which may lead to limited coverage of some channels. The coverage of satellites can be improved through the method of Joint Channel Estimation. Joint Channel Estimation, also known as Demodulation Reference Signal bundling (DMRS bundling), is to jointly demodulate the DMRS for repetition on physical channels, such as for Physical Uplink Shared Channel (PUSCH) repetition. However, there are some problems in improving the signal coverage of satellites through Joint Channel Estimation.

### SUMMARY

To overcome the problems in related technologies, this disclosure provides a phase compensation method, device and storage medium.

According to the first aspect of the embodiments of this disclosure, a phase compensation method is provided, which is applied to a communication device and includes: determining a target link; and performing phase compensation on the target link for repetition of a physical channel.

In one embodiment, performing phase compensation on the target link for repetition of the physical channel includes: performing phase compensation on the target link based on a phase shift of the target link for the repetition of the physical channel.

In one embodiment, the target link includes a service link and/or a feeder link.

In one embodiment, the phase shift of the target link is determined based on at least one of the following:
a time shift on the service link;
a frequency shift on the service link; or
a time shift on the feeder link.

In one embodiment, the frequency shift on the service link is determined based on at least a location of a terminal and a location of a satellite.

In one embodiment, the location of the terminal is determined based on a Global Navigation Satellite System (GNSS), and/or the location of the satellite is determined based on satellite ephemeris information broadcast by a network device; wherein the terminal communicates with the network device through the satellite.

In one embodiment, the time shift on the feeder link is determined based on a common timing-advance parameter.

In one embodiment, the common timing-advance parameter is included in system information broadcast by a network device.

In one embodiment, the communication device is a terminal; and
the time shift on the service link is determined based on at least a location of the terminal and a location of a satellite.

In one embodiment, the communication device is a network device; and
the time shift on the service link is determined based on at least a reference location and a location of a satellite.

In one embodiment, the reference location is determined based on a report from a terminal, and/or the reference location is determined based on a beam where the terminal is located.

In one embodiment, the phase shift of the target link is further determined based on a frequency shift on the feeder link.

In one embodiment, the frequency shift on the feeder link is determined based on at least a location of the network device and the location of the satellite.

In one embodiment, the target link is determined based on at least one of:
a pre-definition by standards;
an indication by the network device; or
capability information of a terminal.

According to the second aspect of the embodiments of this disclosure, a phase compensation device is provided, which is applied to a communication device and includes: a determination module configured to determine a target link; and a compensation module configured to perform phase compensation on the target link for repetition of a physical channel.

In one embodiment, the compensation module is specifically configured to perform phase compensation on the target link based on a phase shift of the target link for the repetition of the physical channel.

In one embodiment, the target link includes a service link and/or a feeder link.

In one embodiment, the phase shift of the target link is determined based on at least one of the following:
a time shift on the service link;
a frequency shift on the service link; or
a time shift on the feeder link.

In one embodiment, the frequency shift on the service link is determined based on at least a location of a terminal and a location of a satellite.

In one embodiment, the location of the terminal is determined based on a Global Navigation Satellite System (GNSS), and/or the location of the satellite is determined based on satellite ephemeris information broadcast by a network device; wherein the terminal communicates with the network device through the satellite.

In one embodiment, the time shift on the feeder link is determined based on a common timing-advance parameter.

In one embodiment, the common timing-advance parameter is included in system information broadcast by a network device.

In one embodiment, the communication device is a terminal; and
the time shift on the service link is determined based on at least a location of the terminal and a location of a satellite.

In one embodiment, the communication device is a network device; and
the time shift on the service link is determined based on at least a reference location and a location of a satellite.

In one embodiment, the reference location is determined based on a report from a terminal, and/or the reference location is determined based on a beam where the terminal is located.

In one embodiment, the phase shift of the target link is further determined based on a frequency shift on the feeder link.

In one embodiment, the frequency shift on the feeder link is determined based on at least a location of the network device and the location of the satellite.

In one embodiment, the target link is determined based on at least one of:
a pre-definition by standards;
an indication by the network device; or
capability information of a terminal.

The technical solutions provided by the embodiments of this disclosure can include the following beneficial effects: by determining the target link that requires phase compensation and performing phase compensation on the target link for the repetition of the physical channel, the phase continuity requirement can be met when repetition of the physical channel is performed on the target link compensated by the communication device, and thereby, the DMRS bundling method can be used to improve the channel coverage.

It should be understood that the above general description and the following detailed description are exemplary and explanatory only, and cannot limit this disclosure.

### BRIEF DESCRIPTION OF THE DRAWINGS

The drawings herein are incorporated into the specification and form a part of this specification, showing embodiments consistent with this disclosure, and are used to explain the principles of this disclosure together with the specification.
FIG. 1 is a schematic diagram of a communication system illustrated according to an exemplary embodiment.
FIG. 2 is a flowchart of a phase compensation method illustrated according to an exemplary embodiment.
FIG. 3 is a flowchart of a phase compensation method illustrated according to an exemplary embodiment.
FIG. 4 is a flowchart of a phase compensation method illustrated according to an exemplary embodiment.
FIG. 5 is a block diagram of a phase compensation device illustrated according to an exemplary embodiment.
FIG. 6 is a block diagram of a phase compensation device illustrated according to an exemplary embodiment.
FIG. 7 is a block diagram of a device for a phase compensation method illustrated according to an exemplary embodiment.
FIG. 8 is a block diagram of a device for a phase compensation method illustrated according to an exemplary embodiment.

### DETAILED DESCRIPTION

Here, the exemplary embodiments will be described in detail, the examples of which are shown in the drawings. When the following description refers to the drawings, unless otherwise indicated, the same numbers in different drawings represent the same or similar elements. The implementation methods described in the following exemplary embodiments do not represent all of the implementation methods consistent with this disclosure.

The phase compensation method provided by the embodiments of this disclosure can be applied to satellite communication systems, High Altitude Platform Station (HAPS) communication, Unmanned Aerial Vehicle (UAV) and other Non-Terrestrial Network (NTN) systems, such as Integrated Communication and Navigation (IcaN) systems, Global Navigation Satellite System (GNSS), etc. The NTN can also be Satellite and Terrestrial Network for 5G (SaT5G) or the system defined by the Aerospace Communication Technology Working Committee (TC12) of China Communications Standards Association (CCSA), which is not limited in this application.

The NTN communication system can be integrated with traditional mobile communication systems. The traditional mobile communication systems here can be Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), Carrier Sense Multiple Access with Collision Avoidance, 5th Generation (5G) communication systems (such as New Radio (NR) systems), and future mobile communication systems.

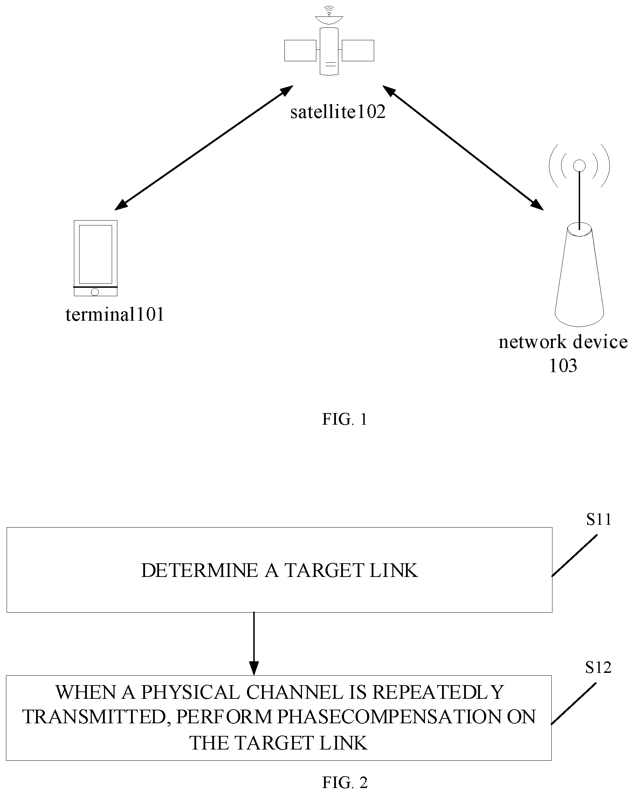

FIG. 1 is a schematic diagram of an NTN communication system provided by the embodiments of this disclosure. Referring to FIG. 1, the NTN communication system includes a terminal 101, a satellite 102 and a network device 103.

The terminal 101 is connected to the satellite 102 through a service link, and the satellite 102 is connected to the network device 103 through a feeder link.

In some embodiments, the terminal 101 can be a device that provides voice and/or data connectivity to users. For example, the terminal can be a handheld device or a vehicle-mounted device with wireless connection functions. Currently, some examples of terminals are: mobile phones, Customer Premise Equipment (CPE), Pocket Personal Computer (PPC), palmtop computers, Personal Digital Assistant (PDA), laptop computers, tablet computers, wearable devices, or vehicle-mounted devices. In addition, the terminal device, when in a Vehicle-to-Everything (V2X) communication system, can also be a vehicle-mounted device. It should be understood that the embodiments of this disclosure do not limit the specific technology and specific device form adopted by the terminal.

In some embodiments, the satellite 102 can be a Low Earth Orbit (LEO) satellite, a Non-Geostationary Earth Orbit (NGEO) satellite, etc.

In some embodiments, the satellite 102 can operate in a transparent mode for communication, which is also known as a bent-pipe mode. The satellite acts as a relay device and simply transparently forwards signals without any processing. The terminal and the network device use the satellite as a relay for wireless communication.

In some embodiments, the network device 103 can also be called a wireless access network device. This wireless access network device can be: a base station, an evolved Node B (eNodeB), a home base station, an access point (AP) in a Wireless Fidelity (Wi-Fi) system, a wireless relay node, a wireless backhaul node, a transmission point (TP) or a transmission and reception point (TRP), etc. It can also be a gNB in an NR system, or it can be a component or part of a device that constitutes a base station. It should be understood that in the embodiments of this disclosure, the specific technology and specific device form adopted by the network device are not limited. In this disclosure, the network device can provide communication coverage for a specific geographical area and can communicate with terminals located in the coverage area (e.g., in a cell). In addition, the network device, when in a V2X communication system, can also be a vehicle-mounted device.

It can be understood that the NTN communication system shown in FIG. 1 is only for illustrative purposes. The NTN communication system can also include other devices, such as core network devices, wireless relay devices and wireless backhaul devices, which are not shown. The embodiments of this disclosure do not limit the number of network devices and terminals included in the NTN communication system.

In related technologies, due to the long distance between satellites and terminals on the ground in NTN, the path loss is large, which may lead to limited coverage of some channels. The coverage of satellites can be improved through the method of Joint Channel Estimation. Joint Channel Estimation, also known as DMRS bundling, can jointly demodulate the DMRS for repetition on multiple physical channels, such as for the PUSCH repetition. However, there are some problems in improving the signal coverage of satellites through Joint Channel Estimation.

For example, the precondition for using DMRS bundling is that the terminal can ensure phase continuity during a period of uplink transmission time. This period of uplink transmission time is also called a time domain window (TDW). Hereinafter, the repetition can also be understood as the repetition within the TDW.

Due to the long distance between the satellite and the terminal and the high-speed movement of the satellite, there will be large time shifts and frequency shifts in the transmission between the terminal and the network device. The existence of time shifts and/or frequency shifts will cause phase changes. At this time, the phase continuity during the repetition of the physical channel cannot be guaranteed.

Therefore, in the NTN communication system, it is necessary to perform phase compensation to make the physical channel meet the phase continuity requirement during repetition. However, it is a problem to be determined whether the phase compensation is performed by the terminal or the network device. If the terminal performs phase compensation, how does the terminal perform it; if the base station performs compensation, whether the base station performs phase compensation on the entire link (both service link and feeder link) or only on the feeder link is also a problem to be determined.

In view of the above, the embodiments of this disclosure provide a phase compensation method, in which a target link is determined, and phase compensation is performed on the target link for the repetition of a physical channel. Thus, based on a determined link, the communication device can perform phase compensation on the link for the repetition of the physical channel, so that the physical channel's repetition in the communication device can meet the phase continuity requirement, and thus the DMRS bundling method can be used to improve the coverage.

The communication device involved in the embodiments of this disclosure can be the terminal or the network device in the NTN system shown in FIG. 1. In the embodiments of this disclosure, the phase compensation for the target link performed by the terminal belongs to pre-compensation, which means that the compensation behavior of the terminal occurs before the start of the repetition. The phase compensation for the target link performed by the network device belongs to post-compensation, which means that the compensation behavior of the network device occurs after receiving the repetition signal.

FIG. 2 is a flowchart of a phase compensation method illustrated according to an exemplary embodiment. As shown in FIG. 2, the phase compensation method is applied in a communication device and includes the following steps.

Step S11, determining a target link.

Step S12, performing phase compensation on the target link for repetition of a physical channel.

In some embodiments, the communication device can be the terminal 101 or the network device 103.

The target link represents a link that requires phase compensation. For example, when the communication device determines that the phase shift between at least two slots for the repetition of multiple physical channels, such as for PUSCH repetition, does not meet the phase shift continuity requirement, it is necessary to determine the target link that requires phase compensation.

In some embodiments, the target link includes a service link and/or a feeder link. For example, in NTN, the service link is a communication link between the terminal and the satellite, and the feeder link is a communication link between the satellite and the network device.

In some embodiments, the communication device determines the target link through a pre-definition by standards, an indication by the network device, or capability information of the terminal.

In some embodiments, since the precondition for using DMRS bundling is that the terminal and the network device can ensure the phase continuity requirement during a period of uplink transmission time, in order to avoid being unable to use DMRS bundling to jointly demodulate the DMRS for repetition on the physical channel, it is necessary to perform phase compensation on the target link for the repetition of the physical channel, so that the compensated phase meets the phase continuity requirement between the terminal and the network device.

In one embodiment, the phase continuity (also known as phase consistency) requirement is that the phase shift between two slots during the repetition of the physical channel is not greater than a preset value. Exemplarily, the preset value is 25 degrees or 30 degrees. As shown in Table 1 below:

**Table 1**

| UL channel | Modulation order | Phase shift between any slot p-1 and slot p | Phase shift between slot 0 and any slot p |
|---|---|---|---|
| Physical Uplink Shared Channel (PUSCH) | Pi/2 BPSK, QPSK | 25 degrees | 30 degrees |
| Physical Uplink Control Channel (PUCCH) | Pi/2 BPSK, BPSK, QPSK | | |
| 1. The terminal capability of the length of maximum duration refers to the maximum time duration during which the terminal is able to meet the phase continuity requirements, assuming no phase consistency violating events defined in TS 38.214 in between. | | | |
| 2. This requirement applies for FDD and TDD bands, for supported DMRS bundling configurations of less than or equal to 8 slots. | | | |
| 3. This requirement applies only for FDD bands, for supported DMRS bundling configurations of 16 slots. | | | |

In some embodiments, phase compensation is performed on the target link based on the phase shift of the target link for the repetition of the physical channel, so that the compensated phase meets the phase continuity requirement.

The phase shift on the target link is determined based on the time shift and/or frequency shift.

It should be noted that the term "time shift" in this disclosure can represent the time offset or the variation of the time offset, that is, the timing drift. The term "frequency shift" can represent the frequency offset or the variation of the frequency offset, that is, the frequency drift.

In one embodiment, the phase shift is determined based on the time shift.

Exemplarily, the phase shift is determined based on the time shift and the sampling frequency.

For example, the phase shift is determined based on the formula ϕ=2π**f**(t1-t2). Here, ϕ represents the phase shift, f represents the sampling frequency, and (t1-t2) represents the time shift between two slots. Assuming that the maximum time shift is 0.1us/ms, the Sub-Carrier Spacing (SCS) is 15KHz, and 1 Resource Block (RB) is configured for transmission, the maximum phase shift after 1ms is around 90KHz*360°*0.1us = 3.24°. The phase shift becomes 25.92° after 8ms. Assuming that the maximum time shift variation is 0.6us/s2, and the phase shift is perfectly compensated by UE at the starting symbol of the repetition, the time shift becomes 12ns/s. Taking 12ns/s as the maximum time shift, the phase shift for 540KHz after 20ms of transmission is around 0.05 degrees, which meets the phase continuity requirement defined in Table 1 above.

In another embodiment, the phase shift is determined based on the frequency shift.

Exemplarily, the phase shift is determined based on the frequency shift and the time length.

For example, the phase shift is determined based on the formula φ = 2π * *f_{Doppler}* * t. Here, ϕ represents the phase shift, *f_{Doppler}* represents the Doppler frequency shift, and t represents the time length. It is assumed that the frequency shift is perfectly compensated at the starting symbol of the repetition. The maximum frequency drift is 0.09 ppm/s. Assuming that the maximum frequency drift remains unchanged during the repetition, the average frequency drift is *f_{Doppler}* = 1/2 at, where a represents the maximum frequency drift equal to 0.09 ppm/s. Then after 1ms, the phase shift between slot p-1 and slot p is 0.0468°, and after 20ms, the phase shift between slot p-20 and slot p is 18.72°, which meets the phase continuity requirement defined in Table 1 above.

It should be noted that the sampling frequency in this disclosure is determined based on the frequency resources for the repetition of the physical channel.

In one embodiment, the sampling frequency can be determined according to a repetition frequency of the physical channel. For example, it is one-half or one-third or one-fourth of the repetition frequency of the physical channel. Alternatively, the sampling frequency is obtained by calculating the frequency resources used for the repetition of the physical channel based on a preset calculation method. For example, in the embodiments of this disclosure, the sampling frequency is set to half of the frequency at which the repetition is performed on the physical channel.

Similarly, the time length in the embodiments of this disclosure can be the unit time length of a single repetition of the physical channel, or the time length of the entire TDW, or an undefined time length depending on the UE implementation. The following embodiments will not elaborate on this.

In the embodiments of this disclosure, by determining the target link that requires phase compensation and performing phase compensation on the target link for the repetition of the physical channel, the phase continuity requirement can be met when repetition of the physical channel is performed on the target link compensated by the communication device, and thereby, the DMRS bundling method can be used to improve the channel coverage.

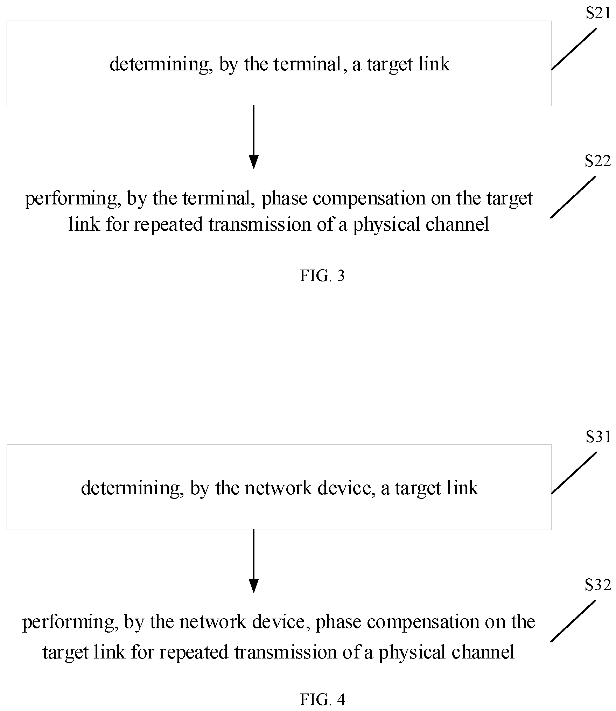

Here, it is illustrated with the communication device being a terminal. As shown in FIG. 3, it is a flowchart of a phase compensation method illustrated according to an exemplary embodiment. As shown in FIG. 3, the phase compensation method is applied in a terminal and includes the following steps.

Step S21, determining, by the terminal, a target link.

Step S22, performing, by the terminal, phase compensation on the target link for repetition of a physical channel.

In the embodiments of this disclosure, the terminal determines the target link for compensation and performs phase compensation on the target link for the repetition of the physical channel. Thus, the terminal can perform, based on the determined link, phase compensation on the link for the repetition of the physical channel, so that the phase continuity requirement can be met when the physical channel is repeatedly transmitted, which in turn enables the use of DMRS bundling method to improve the channel coverage.

In the phase compensation method provided by the embodiments of this disclosure, the target link includes a service link and/or a feeder link.

In one embodiment, the terminal determines that the target link is a service link.

In another embodiment, the terminal determines that the target link is a feeder link.

In another embodiment, the terminal determines that the target link includes the service link and the feeder link.

In the embodiments of this disclosure, the terminal can determine the target link and thus perform phase compensation on the determined target link to make the compensated phase on the target link meet the phase continuity requirement.

In some embodiments, for the repetition of the physical channel, the terminal performs phase compensation on the target link based on the phase shift of the target link.

In some embodiments, the phase shift of the target link is determined based on at least one of the following:
a time shift on the service link;
a frequency shift on the service link; or
a time shift on the feeder link.

In some embodiments, when the target link is the service link, the phase shift of the target link is determined based on the time shift on the service link.

In one embodiment, the phase shift is determined based on the time shift on the service link and the sampling frequency.

For example, the phase shift of the service link is determined based on the formula ϕ = 2π*f*(t₁-t₂). ϕ represents the phase shift, f represents the sampling frequency, and t₁-t₂ represents the time shift on the service link.

In other embodiments, when the terminal determines that the target link is the service link, the phase shift of the target link is determined based on the frequency shift on the service link.

In one embodiment, when the terminal determines that the target link is the service link, the phase shift of the target link is determined based on the frequency shift on the service link and the time length.

For example, the phase shift of the service link is determined based on the formula ϕ = 2π * f_{doppler}* t. ϕ represents the phase shift, f_{doppler} represents the frequency shift on the service link, and t represents the time length.

In other embodiments, when the terminal determines that the target link is the service link, the phase shift of the target link is determined based on the frequency shift and the frequency shift on the service link.

In one embodiment, when the terminal determines that the target link is the service link, the first phase shift is determined based on the time shift on the service link and the sampling frequency, and the second phase shift is determined based on the frequency shift on the service link and the time length. The phase shift on the target link includes the first phase shift and the second phase shift.

For example, the first phase shift on the service link is determined based on the formula ϕ = 2π*f*(t₁-t₂). ϕ represents the phase shift, f represents the sampling frequency, and t₁-t₂ represents the time shift on the service link. The second phase shift on the service link is determined based on the formula ϕ = 2π*f_{doppler}*t. ϕ represents the phase shift, f_{doppler} represents the frequency shift on the service link, and t represents the time length.

In other embodiments, when the terminal determines that the target link is the feeder link, the phase shift on the feeder link is determined based on the time shift on the feeder link.

In one embodiment, when the terminal determines that the target link is the feeder link, the phase shift is determined based on the time shift on the feeder link and the sampling frequency.

For example, the phase shift on the feeder link is determined based on the formula ϕ=2π*f**TA* . ϕ represents the phase shift, f represents the sampling frequency, and TA represents the time shift on the feeder link.

In other embodiments, when the terminal determines that the target link includes the service link and the feeder link, the phase shift on the service link is determined based on the time shift and/or frequency shift on the service link, and the phase shift on the feeder link is determined based on the time shift on the feeder link.

In one embodiment, when the terminal determines that the target link includes the service link and the feeder link, the phase shift is determined based on the time shift on the feeder link and the sampling frequency. The phase shift on the service link can be referred to as described in the above exemplary embodiments, and will not be repeated herein.

For example, the phase shift on the feeder link is determined based on the formula ϕ=2π*f**TA.* ϕ represents the phase shift, f represents the sampling frequency, and TA represents the time shift on the feeder link.

In the phase compensation method provided by the embodiments of this disclosure, the time shift on the service link is determined based on at least a location of the terminal and a location of the satellite.

In an exemplary embodiment, the distance between the terminal and the satellite is determined based on the location of the terminal and the location of the satellite, and the time shift is determined in combination with the speed of light.

In the phase compensation method provided by the embodiments of this disclosure, the frequency shift on the service link is determined based on at least the location of the terminal and the location of the satellite.

In an exemplary embodiment, the relative moving speed between the terminal and the satellite is determined based on the location of the terminal and the location of the satellite, and the frequency shift is determined based on the relative moving speed and the speed of light.

In some embodiments, the location of the terminal is determined based on a Global Navigation Satellite System (GNSS), and/or the location of the satellite is determined based on satellite ephemeris information broadcast by the network device, where the terminal communicates with the network device through the satellite.

In one embodiment, the satellite ephemeris information is included in the System Information Block 19 (SIB19).

In the embodiments of this disclosure, since it is difficult for the terminal to obtain the location information of the network device, etc., the terminal does not consider performing phase compensation on the feeder link based on the frequency shift.

In the phase compensation method provided by the embodiments of this disclosure, the time shift on the feeder link is determined based on a common timing-advance parameter.

In some embodiments, the common timing-advance parameter is included in the system information broadcast by the network device.

In the phase compensation method provided by the embodiments of this disclosure, the link for phase compensation is determined based on at least one of:
a pre-definition by standards;
an indication by the network device; or
capability information of the terminal.

The following uses exemplary embodiments to illustrate the way the terminal determines the link for phase compensation.

In an exemplary embodiment, the target link (service link and/or feeder link) for the terminal to perform phase compensation is pre-defined in the standards, and the terminal performs phase compensation on the target link according to the standards.

In another exemplary embodiment, the network device indicates the target link, and the terminal performs phase compensation on the target link based on the indication by the network device.

In another exemplary embodiment, if the capability information of the terminal indicates support for the terminal to perform phase compensation on the target link, the terminal performs phase compensation on the target link supported by the terminal based on the capability information.

In another exemplary embodiment, the method for the terminal to determine the phase shift of the target link (service link and/or feeder link) is pre-defined in the standard. When the terminal has the capability of phase compensation, the terminal can perform phase compensation on the target link according to the standard. When the terminal lacks the capability of phase compensation, the terminal does not perform phase compensation on the target link.

In yet another exemplary embodiment, the standard can pre-define the specific phase compensation method for the terminal to apply to the target link, or define that the terminal determines the specific phase compensation method on its own.

In yet another exemplary embodiment, the network device can indicate the target link. The terminal can determine the target link based on the indication by the network device and perform phase compensation on the target link. In one example, the terminal can determine the target link according to the indication by the network device and the capability information of the terminal.

In yet another exemplary embodiment, the network device can also indicate the specific phase compensation method for the terminal. In one example, the network device can indicate the specific phase compensation method for the terminal according to the terminal's capability. In this case, the network device can receive the terminal's capabilities reported by the terminal, where the terminal's capabilities include whether the terminal supports phase compensation.

It should be understood that the above embodiments are only examples, and this application does not limit the method for determining the target link and the specific phase compensation method.

Here, it is illustrated with the communication device being a network device. As shown in FIG. 4, it is a flowchart of a phase compensation method illustrated according to an exemplary embodiment. As shown in FIG. 4, the phase compensation method is used in a network device and includes the following steps.

Step S31, determining, by the network device, a target link.

Step S32, performing, by the network device, phase compensation on the target link for repetition of a physical channel.

In the embodiments of this disclosure, the network device determines the target link for compensation. For the repetition of the physical channel, the network device performs phase compensation on the target link. Thus, the network device can perform, based on the determined link, phase compensation on the link for the repetition of the physical channel, so that the repetition of the physical channel can meet the phase continuity requirement, and thus the DMRS bundling method can be used to improve the channel coverage.

In the phase compensation method provided by the embodiments of this disclosure, the target link includes a service link and/or a feeder link.

In one embodiment, the network device determines that the target link is a feeder link.

In another embodiment, the network device determines that the target link is a service link.

In another embodiment, the network device determines that the target link includes the service link and the feeder link.

In the embodiments of this disclosure, the network device can determine the target link and thus perform phase compensation on the determined target link to make the compensated phase in the target link meet the phase continuity requirement.

In some embodiments, for the repetition of the physical channel, the network device performs phase compensation on the target link based on the phase shift of the target link.

In some embodiments, the phase shift on the target link is determined based on at least one of the following:
a time shift on the service link;
a frequency shift on the service link;
a time shift on the feeder link; or
a frequency shift on the feeder link.

In some embodiments, when the network device determines that the target link is the feeder link, the phase shift on the target link is determined based on the time shift on the feeder link.

In one embodiment, when the network device determines that the target link is the feeder link, the phase shift on the feeder link is determined based on the time shift on the feeder link and the sampling frequency.

For example, the phase shift on the feeder link is determined based on the formula ϕ=2π*f**TA.* ϕ represents the phase shift, f represents the sampling frequency, and TA represents the time shift on the feeder link.

In other embodiments, when the network device determines that the target link is the feeder link, the phase shift on the feeder link is determined based on the frequency shift on the feeder link.

In one embodiment, when the network device determines that the target link is the feeder link, the phase shift on the feeder link is determined based on the frequency shift on the feeder link and the time length.

For example, the phase shift on the feeder link is determined based on the formula ϕ = 2π*f_{doppler}*t. ϕ represents the phase shift, f_{doppler} represents the frequency shift on the feeder link, and t represents the time length.

In other embodiments, when the network device determines that the target link is the feeder link, the phase shift on the feeder link is determined based on the time shift and the frequency shift on the feeder link.

In one embodiment, when the network device determines that the target link is the feeder link, the first phase shift is determined based on the time shift on the feeder link and the sampling frequency, and the second phase shift on the feeder link is determined based on the frequency shift on the feeder link and the time length. The phase shift on the feeder link includes the first phase shift and the second phase shift.

For example, the first phase shift on the feeder link is determined based on the formula ϕ = 2π*f**TA*, where ϕ represents the phase shift, f represents the sampling frequency, and TA represents the time shift on the feeder link. The second phase shift on the feeder link is determined based on the formula ϕ = 2π*f_{doppler} *t, where ϕ represents the phase shift, f_{doppler} represents the frequency shift on the feeder link, and t represents the time length.

In other embodiments, when the network device determines that the target link is the service link, the phase shift on the service link is determined based on the time shift on the service link.

In one embodiment, when the network device determines that the target link is the service link, the phase shift on the service link is determined based on the time shift and the sampling frequency.

For example, the phase shift on the service link is determined based on the formula ϕ = 2π*f*(t₁-t₂), where ϕ represents the phase shift, f represents the sampling frequency, and t₁-t₂ represents the time shift on the service link.

In other embodiments, when the network device determines that the target link is the service link, the phase shift on the service link is determined based on the frequency shift on the service link.

In one embodiment, when the network device determines that the target link is the service link, the phase shift on the service link is determined based on the frequency shift and the time length.

For example, the phase shift on the service link is determined based on the formula ϕ = 2π*f_{doppler}*t, where ϕ represents the phase shift, f_{doppler} represents the frequency shift on the service link, and t represents the time length.

In other embodiments, when the network device determines that the target link includes the service link and the feeder link, the phase shift on the service link is determined based on the time shift on the service link, and the phase shift on the feeder link is determined based on the time shift and/or frequency shift on the feeder link.

In one embodiment, when the network device determines that the target link includes the service link and the feeder link, the phase shift on the service link is determined based on the time shift and the sampling frequency. The phase shift on the feeder link can be referred to as described in the above exemplary embodiments, and will not be repeated herein.

For example, the phase shift on the service link is determined based on the formula ϕ = 2π*f*(t₁-t₂), where ϕ represents the phase shift, f represents the sampling frequency, and t₁-t₂ represents the time shift on the service link.

In other embodiments, when the network device determines that the target link includes the service link and the feeder link, the phase shift on the service link is determined based on the frequency shift on the service link, and the phase shift on the feeder link is determined based on the time shift and/or frequency shift on the feeder link.

In one embodiment, when the network device determines that the target link includes the service link and the feeder link, the phase shift on the service link is determined based on the frequency shift and the time length. The phase shift on the feeder link can be referred to as described in the above exemplary embodiments, and will not be repeated herein.

For example, the phase shift on the service link is determined based on the formula ϕ = 2π*f_{doppler}*t, where ϕ represents the phase shift, f_{doppler} represents the frequency shift on the service link, and t represents the time length.

In other embodiments, when the network device determines that the target link includes the service link and the feeder link, the phase shift on the service link is determined based on the time shift and/or frequency shift on the service link, and the phase shift on the feeder link is determined based on the time shift and/or frequency shift on the feeder link.

In one embodiment, when the network device determines that the target link includes the service link and the feeder link, the first phase shift on the service link is determined based on the time shift and the sampling frequency, the second phase shift on the service link is determined based on the frequency shift and the time length, and the phase shift on the service link includes the first phase shift and second phase shift. The phase shift on the feeder link can be referred to as described in the above exemplary embodiments, and will not be repeated herein.

For example, the phase shift on the service link is determined based on the formula ϕ = 2π*f*(t₁-t₂), ϕ represents the phase shift, f represents the sampling frequency, and t₁-t₂ represents the time shift on the service link. The phase shift on the feeder link is determined based on the formula ϕ=2π*f**TA,* where ϕ represents the phase shift, f represents the sampling frequency, and TA represents the time shift on the feeder link.

In the phase compensation method provided by the embodiments of this disclosure, the frequency shift on the service link is determined based on at least the location of the terminal and the location of the satellite.

In an exemplary embodiment, the relative moving speed between the terminal and the satellite is determined based on the location of the terminal and the location of the satellite, and the frequency shift is determined based on the relative moving speed and the speed of light.

In some embodiments, the location of the terminal is determined based on a Global Navigation Satellite System (GNSS), and/or the location of the satellite is determined based on the satellite ephemeris information broadcast by the network device, where the terminal communicates with the network device through the satellite.

In one embodiment, the satellite ephemeris information is included in the System Information Block 19 (SIB19).

In the phase compensation method provided by the embodiments of this disclosure, the time shift on the service link is determined based on at least a reference location and the location of the satellite.

The reference location represents a location point on the service link. There is one reference location on one service link, and the reference locations on different service links can be the same or different.

In the embodiments of this disclosure, since one satellite is usually connected to multiple terminals, the distances between multiple terminals and the satellite are not fixed, that is, the service link of each terminal is different. If the network device performs phase compensation on the entire service link, the network device needs to determine the location of each terminal and the corresponding phase shift of the service link of each terminal, which makes the complexity of the network device performing phase compensation on the service link high. Therefore, in order to reduce the complexity of the network device performing phase compensation on the service link, a reference location can be considered and determined on the service link first. Assuming that the locations of all terminals in a preset area are taken as the reference locations, in this way, for the network device, the phase compensation performed on the service links of all terminals will be the same, and there is no need to determine the location of each terminal individually.

In some embodiments, the reference location is determined based on a report from the terminal, or the reference location is determined based on the beam where the terminal is located.

In one embodiment, each terminal reports its own determined reference location respectively.

In another embodiment, the reference location is the center point of the beam where the terminal is located.

In the phase compensation method provided by the embodiments of this disclosure, the time shift on the feeder link is determined based on a common timing-advance parameter.

In some embodiments, the common timing-advance parameter is included in the system information broadcast by the network device.

In the phase compensation method provided by the embodiments of this disclosure, the frequency shift on the feeder link is determined based on at least the location of the network device and the location of the satellite.

In one embodiment, the relative moving speed between the network device and the satellite is determined based on the location of the network device and the location of the satellite, and the frequency shift of the feeder link is determined based on the relative moving speed and the speed of light.

In the phase compensation method provided by the embodiments of this disclosure, the target link is determined based on at least one of:
a pre-definition by standards;
an indication by the network device; or
capability information of the terminal.

The following uses exemplary embodiments to illustrate the way the network device determines the target link.

In an exemplary embodiment, the target link (service link and/or feeder link) for the network device to perform phase compensation is pre-defined in the standards, and the network device performs phase compensation on the target link according to the standards.

When the network device performs phase compensation on the target link, the network device can require the terminal to report relevant information, such as the terminal's location information.

In another exemplary embodiment, the network device indicates that the target link for the terminal to perform phase compensation is the service link, and the network device can determine that the target link for the network device to perform phase compensation is the feeder link.

In another exemplary embodiment, the network device receives the terminal's capability information reported by the terminal, and the network device can determine whether to perform phase compensation on the target link based on the terminal's capability information reported.

For example, if the network device determines based on the terminal's capability information that the target link supported by the terminal for phase compensation is the service link, the network device can determine that the target link for phase compensation is the feeder link.

For another example, if the network device determines based on the terminal's capability information that the terminal does not support phase compensation, the network device can determine that the target link for phase compensation is the service link and/or the feeder link.

In another exemplary embodiment, the method for the network device to determine the phase shift of the target link (service link and/or feeder link) is pre-defined in the standards, and the network device can perform phase compensation on the target link based on the standards.

In another exemplary embodiment, when the target link for the terminal to perform phase compensation is pre-defined in the standards, but the terminal lacks the capability of phase compensation, the network device performs phase compensation on the target link. It should be understood that the above embodiments are only examples, and this application does not limit the method for determining the target link and the specific phase compensation method.

It should be noted that the above embodiments can be implemented separately or combined with any one of embodiments of this disclosure. This will not be repeated here.

The following provides several examples of combined methods. This application also provides the following phase compensation methods.

Method 1: The terminal performs phase compensation on the service link, and the network device performs phase compensation on the feeder link.

In one embodiment, the terminal determines the time shift and/or frequency shift on the service link based on the location of the terminal and the location of the satellite, and the terminal performs phase compensation on the service link based on the time shift and/or frequency shift on the service link.

In another embodiment, the network device determines the time shift on the feeder link based on the common TA parameter, and/or determines the frequency shift on the feeder link based on the location of the network device and the location of the satellite. The network device performs phase compensation on the feeder link based on the time shift and/or frequency shift on the feeder link.

For other contents of this method, please refer to the relevant contents in the previous embodiments. This will not be repeated here.

Method 2: The terminal performs phase compensation on the service link and the feeder link.

In one embodiment, the terminal determines the time shift and/or frequency shift on the service link based on the location of the terminal and the location of the satellite, and the terminal performs phase compensation on the service link based on the time shift and/or frequency shift on the service link.

In another embodiment, the terminal determines the time shift on the feeder link based on the common TA parameter, and the terminal performs phase compensation on the feeder link based on the time shift on the feeder link.

For other contents of this method, please refer to the relevant contents in the previous embodiments. This will not be repeated here.

Method 3: The network device performs phase compensation on the service link and the feeder link.

In one embodiment, the network device determines the time shift on the service link based on the reference location and the location of the satellite, and/or the network device determines the frequency shift on the service link based on the location of the terminal and the location of the satellite.

The reference location is a location point on the service link. There is one reference location on one service link, and the reference locations on different service links can be the same or different.

In another embodiment, the network device performs phase compensation on the service link based on the time shift and/or frequency shift on the service link. The network device determines the time shift on the feeder link based on the common TA parameter, and/or determines the frequency shift on the feeder link based on the location of the network device and the location of the satellite. The network device performs phase compensation on the feeder link based on the time shift and/or frequency shift on the feeder link.

For other contents of this method, please refer to the relevant contents in the previous embodiments. This will not be repeated here.

It should also be noted that in some embodiments, the execution entity of phase compensation (that is, whether it is executed by the terminal or the network device) can be pre-defined in the standard. Alternatively, more specifically, the standard can also pre-define which target link (such as the service link or the feeder link) is to be phase- compensated by a certain execution entity (such as the terminal or the network device). In other embodiments, the network device can also indicate the terminal to perform phase compensation on the target link. Alternatively, more specifically, the network device can also indicate the terminal to perform phase compensation on a certain target link (such as the service link or the feeder link). In general, the embodiments of this application do not specifically limit this.

In the embodiments of this disclosure, the terminal and the network device can respectively perform phase compensation on their respective determined links, ensuring phase continuity in the compensated links. This, in turn, enables the use of DMRS bundling method to improve the channel coverage.

It should be noted that those skilled in the art can understand that the various implementation manners/embodiments involved in the embodiments of this disclosure can be used in combination with the previous embodiments or independently. Whether used alone or in combination with the previous embodiments, their implementation principles are similar. In the embodiments of this disclosure, some embodiments are described in the implementation manner of being used in combination. Of course, those skilled in the art can understand that such an example description is not a limitation of the embodiments of this disclosure.

Based on the same concept, the embodiments of this disclosure also provide a phase compensation device.

It can be understood that the phase compensation device provided by the embodiments of this disclosure includes the corresponding hardware structures and/or software modules for executing various functions in order to achieve the above functions. Combining the exemplary units and algorithm steps disclosed in the embodiments of this disclosure, these embodiments of this disclosure can be implemented in the form of hardware or a combination of hardware and computer software. Whether a particular function is executed by hardware or by computer software driving the hardware depends on the specific application of the technical solution and the design constraints. Those skilled in the art may employ different methods to implement the described functions for each specific application, but such implementations should not be considered to exceed the scope of the technical solutions in the embodiments of this disclosure.

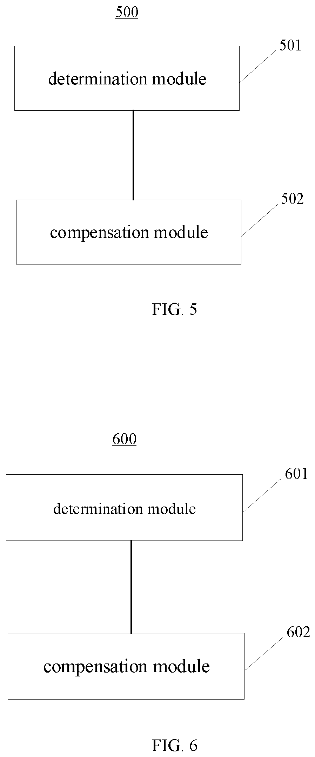

FIG. 5 is a structural block diagram of a device 500 provided by this application. This device 500 can be used to execute the above phase compensation method. As shown in FIG. 5, this device 500 includes a determination module 501 and a compensation module 502.

The determination module 501 is configured to determine a target link.

The compensation module 502 is configured to perform phase compensation on the target link for repetition of a physical channel.

In one embodiment, the compensation module 502 is specifically configured to perform phase compensation on the target link based on a phase shift of the target link for the repetition of the physical channel.

In one embodiment, the target link includes a service link and/or a feeder link.

In one embodiment, the phase shift of the target link is determined based on at least one of:
a time shift on the service link;
a frequency shift on the service link; or
a time shift on the feeder link.

In one embodiment, the frequency shift on the service link is determined based on at least a location of a terminal and a location of a satellite.

In one embodiment, the location of the terminal is determined based on a Global Navigation Satellite System (GNSS), and/or the location of the satellite is determined based on satellite ephemeris information broadcast by a network device; wherein the terminal communicates with the network device through the satellite.

In one embodiment, the time shift on the feeder link is determined based on a common timing-advance parameter.

In one embodiment, the common timing-advance parameter is included in system information broadcast by a network device.

In one embodiment, the time shift on the service link is determined based on at least a location of the terminal and a location of a satellite.

In one embodiment, the target link is determined based on at least one of:
a pre-definition by standards;
an indication by the network device; or
capability information of a terminal.

FIG. 6 is a structural block diagram of a device 600 provided by this application. This device 600 can be used to execute the above phase compensation method. As shown in FIG. 6, this device 600 includes a determination module 601 and a compensation module 602.

The determination module 601 is configured to determine a target link.

The compensation module 602 is configured to perform phase compensation on the target link for repetition of a physical channel.

In one embodiment, the compensation module 602 is specifically configured to perform phase compensation on the target link based on a phase shift of the target link for the repetition of the physical channel.

In one embodiment, the target link includes a service link and/or a feeder link.

In one embodiment, the phase shift of the target link is determined based on at least one of the following:
a time shift on the service link;
a frequency shift on the service link; or
a time shift on the feeder link.

In one embodiment, the frequency shift on the service link is determined based on at least a location of a terminal and a location of a satellite.

In one embodiment, the location of the terminal is determined based on a Global Navigation Satellite System (GNSS), and/or the location of the satellite is determined based on satellite ephemeris information broadcast by a network device; wherein the terminal communicates with the network device through the satellite.

In one embodiment, the time shift on the feeder link is determined based on a common timing-advance parameter.

In one embodiment, the common timing-advance parameter is included in system information broadcast by a network device.

In one embodiment, the time shift on the service link is determined based on at least a reference location and a location of a satellite.

In one embodiment, the reference location is determined based on a report from a terminal, and/or the reference location is determined based on a beam where the terminal is located.

In one embodiment, the phase shift of the target link is further determined based on a frequency shift on the feeder link.

In one embodiment, the frequency shift on the feeder link is determined based on at least a location of the network device and the location of the satellite.

In one embodiment, the target link is determined based on at least one of:
a pre-definition by standards;
an indication by the network device; or
capability information of a terminal.

It should be noted that the device 500 and device 600 may also include other modules, such as a communication module. Regarding the devices in the embodiments, the specific ways in which each module performs operations have been described in detail in the embodiments related to the method, and will not be elaborated here.

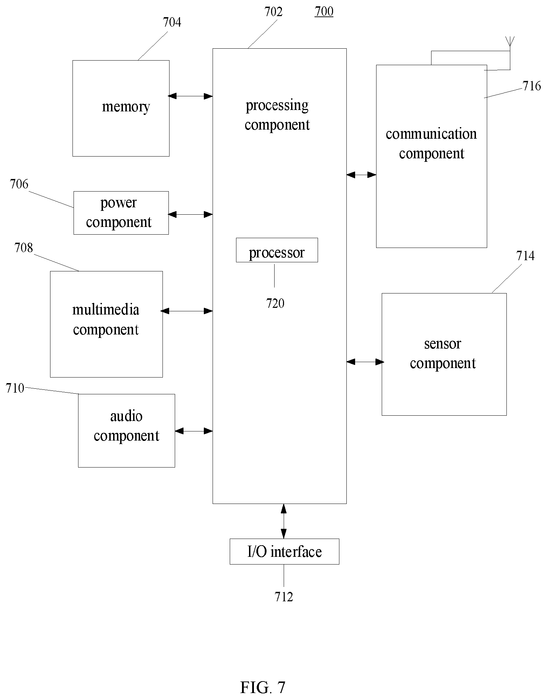

FIG. 7 is a block diagram of a device 700 provided by this application. For example, the device 700 can be a mobile phone, a computer, a digital broadcast terminal, a messaging device, a game console, a tablet device, a medical device, a fitness device, a personal digital assistant, etc. This application does not specifically limit the specific form of the device 700.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls the overall operation of the device 700, such as operations related to display, phone calls, data communication, camera operations, and recording operations. The processing component 702 may include one or more processors 720 to execute instructions to complete all or part of the steps of the above method. In addition, the processing component 702 may include one or more modules to facilitate the interaction between the processing component 702 and other components. For example, the processing component 702 may include a multimedia module to facilitate the interaction between the multimedia component 708 and the processing component 702.

The memory 704 is configured to store various types of data to support the operation of the device 700. Examples of these data include instructions for any application or method operating on the device 700, contact data, phone book data, messages, pictures, videos, etc. The memory 704 can be implemented by any type of volatile or non-volatile storage device or their combination, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disks, or optical discs.

The power component 706 provides power to various components of the device 700. The power component 706 may include a power management system, one or more power sources, and other components related to generating, managing, and distributing power for the device 700.

The multimedia component 708 includes a screen that provides an output interface between the device 700 and the user. In some embodiments, the screen may include a liquid-crystal display (LCD) and a touch panel (TP). If the screen includes a touch panel, the screen can be implemented as a touch-screen to receive input signals from the user. The touch panel includes one or more touch sensors to sense touches, swipes, and gestures on the touch panel. The touch sensors can not only sense the boundaries of touch or swipe actions but also detect the duration and pressure related to the touch or swipe operation. In some embodiments, the multimedia component 708 includes a front-facing camera and/or a rear-facing camera. When the device 700 is in an operation mode, such as a shooting mode or a video mode, the front-facing camera and/or the rear-facing camera can receive external multimedia data. Each front-facing camera and rear-facing camera can be a fixed optical lens system or have focal length and optical zoom capabilities.

The audio component 710 is configured to output and/or input audio signals. For example, the audio component 710 includes a microphone (MIC). When the device 700 is in an operation mode, such as a call mode, a recording mode, and a voice-recognition mode, the microphone is configured to receive external audio signals. The received audio signals can be further stored in the memory 704 or sent via the communication component 716. In some embodiments, the audio component 710 also includes a speaker for outputting audio signals.

The I/O interface 712 provides an interface between the processing component 702 and peripheral interface modules, and the peripheral interface modules can be a keyboard, a click wheel, buttons, etc. These buttons may include, but are not limited to: a home button, volume buttons, a start button, and a lock button.

The sensor component 714 includes one or more sensors for providing state assessments in various aspects of the device 700. For example, the sensor component 714 can detect the open/closed state of the device 700, the relative positioning of components, such as the display and keypad of the device 700. The sensor component 714 can also detect the position change of the device 700 or a component of the device 700, the presence or absence of user contact with the device 700, the orientation or acceleration/deceleration of the device 700, and the temperature change of the device 700. The sensor component 714 may include a proximity sensor configured to detect the presence of nearby objects without any physical contact. The sensor component 714 can also include a light sensor, such as a CMOS or CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the device 700 and other devices. The device 700 can access a wireless network based on communication standards, such as Wi-Fi, 2G, or 3G, or a combination thereof. In an exemplary embodiment, the communication component 716 receives broadcast signals or broadcast-related information from an external broadcast management system via a broadcast channel. In an exemplary embodiment, the communication component 716 also includes a near-field communication (NFC) module to facilitate short-range communication. For example, the NFC module can be implemented based on radio-frequency identification (RFID) technology, infrared data association (IrDA) technology, ultra-wideband (UWB) technology, Bluetooth^{®} (BT) technology, and other technologies.

In an exemplary embodiment, the device 700 can be implemented by one or more application-specific integrated circuits (ASICs), digital signal processors (DSPs), digital signal processing devices (DSPDs), programmable logic devices (PLDs), field-programmable gate arrays (FPGAs), controllers, micro-controllers, micro-processors, or other electronic components to execute the above method.

In an exemplary embodiment, a non-transitory computer-readable storage medium including instructions is also provided, such as the memory 704 including instructions. The above instructions can be executed by the processor 720 of the device 700 to complete the above method. For example, the non-transitory computer-readable storage medium can be a ROM, a random-access memory (RAM), a CD - ROM, a magnetic tape, a floppy disk, and an optical data storage device.

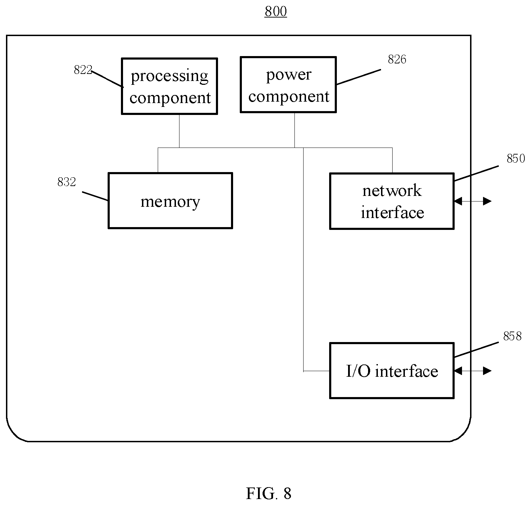

FIG. 8 is a block diagram of a device 800 for phase compensation illustrated according to an exemplary embodiment. For example, the device 800 can be provided as a network device. Referring to FIG. 8, the device 800 includes a processing component 822, which further includes one or more processors, and a memory resource represented by a memory 832 for storing instructions executable by the processing component 822, such as application programs. The application programs stored in the memory 832 may include one or more modules, each corresponding to a set of instructions. In addition, the processing component 822 is configured to execute instructions to perform the above phase compensation method.

The device 800 may also include a power component 826 configured to perform power management of the device 800, a wired or wireless network interface 850 configured to connect the device 800 to a network, and an input-output (I/O) interface 858. The device 800 can operate based on an operating system stored in the memory 832, such as Windows ServerTM, Mac OS XTM, UnixTM, LinuxTM, FreeBSDTM, or the like.

In an exemplary embodiment, a non-transitory computer-readable storage medium including instructions is also provided, such as the memory 832 including instructions. The above instructions can be executed by the processing component 822 of the device 800 to complete the above method. For example, the non-transitory computer-readable storage medium can be a ROM, a random-access memory (RAM), a CD-ROM, a magnetic tape, a floppy disk, and an optical data storage device.

It can be further understood that in this disclosure, "multiple" or "plurality of" means two or more, and other quantifiers are similar. "And/or" describes the association relationship of associated objects, indicating that there can be three relationships. For example, A and/or B can represent: A exists alone, A and B exist simultaneously, and B exists alone. The character "/" generally indicates that the associated objects before and after are in an "or" relationship. The singular forms of "a", "an", "this" are also intended to include the plural forms unless the context clearly indicates otherwise.

It can be further understood that the meanings of words such as "in response to" and "if" involved in this disclosure depend on the context and the actual application scenario. For example, the word "in response to" used here can be interpreted as "when..." , "upon...", "if", or "in case".

It can be further understood that terms such as "first" and "second" are used to describe various information, but these information should not be limited to these terms. These terms are only used to distinguish the same type of information from each other, and do not represent a specific order or importance. In fact, the expressions "first" and "second" can be completely interchanged. For example, without departing from the scope of this disclosure, the first information can also be called the second information, and similarly, the second information can also be called the first information.

It can be further understood that although the operations are described in a specific order in the drawings in the embodiments of this disclosure, it should not be understood as requiring these operations to be executed in the specific order shown or in a serial order, nor is it required to execute all the shown operations to obtain the desired results. In a specific environment, multi-tasking and parallel processing may be beneficial.

It should be understood that this disclosure is not limited to the precise structure described above and shown in the drawings, and various modifications and changes can be made without departing from its scope. The scope of this disclosure is only limited by the appended claims.

## Claims

1. A phase compensation method, applied to a communication device, the method comprising:
determining a target link; and
performing phase compensation on the target link for repetition of a physical channel.

2. The method according to claim 1, wherein performing phase compensation on the target link for repetition of the physical channel comprises:
performing phase compensation on the target link based on a phase shift of the target link for the repetition of the physical channel.

3. The method according to claim 1 or 2, wherein the target link comprises a service link and/or a feeder link.

4. The method according to claim 3, wherein the phase shift of the target link is determined based on at least one of:
a time shift on the service link;
a frequency shift on the service link; or
a time shift on the feeder link.

5. The method according to claim 4, wherein the frequency shift on the service link is determined based on at least a location of a terminal and a location of a satellite.

6. The method according to claim 5, wherein the location of the terminal is determined based on a Global Navigation Satellite System (GNSS), and/or the location of the satellite is determined based on satellite ephemeris information broadcast by a network device; wherein the terminal communicates with the network device through the satellite.

7. The method according to any one of claims 4 to 6, wherein the time shift on the feeder link is determined based on a common timing-advance parameter.

8. The method according to claim 7, wherein the common timing-advance parameter is included in system information broadcast by a network device.

9. The method according to any one of claims 4 to 8, wherein
the communication device is a terminal; and
the time shift on the service link is determined based on at least a location of the terminal and a location of a satellite.

10. The method according to any one of claims 4 to 8, wherein
the communication device is a network device; and
the time shift on the service link is determined based on at least a reference location and a location of a satellite.

11. The method according to claim 10, wherein the reference location is determined based on a report from a terminal, and/or the reference location is determined based on a beam where the terminal is located.

12. The method according to claim 10 or 11, wherein the phase shift of the target link is further determined based on a frequency shift on the feeder link.

13. The method according to claim 12, wherein the frequency shift on the feeder link is determined based on at least a location of the network device and the location of the satellite.

14. The method according to any one of claims 1 to 13, wherein the target link is determined based on at least one of:
a pre-definition by standards;
an indication by the network device; or
capability information of a terminal.

15. A phase compensation device, applied to a communication device, the phase compensation device comprising:
a determination module configured to determine a target link; and
a compensation module configured to perform phase compensation on the target link for repetition of a physical channel.

16. A phase compensation device, comprising:
a processor; and
a memory for storing instructions executable by the processor;
wherein the processor is configured to perform the method according to any one of claims 1 to 14.

17. A storage medium, storing instructions that, when executed by a processor of a communication device, cause the communication device to execute the method according to any one of claims 1 to 14.
